(19) Europäisches Patentamt
European Patent Office
Office européen des brevets

(11) **EP 2 669 656 A1**

(12) **EUROPEAN PATENT APPLICATION**
published in accordance with Art. 153(4) EPC

(43) Date of publication:
**04.12.2013 Bulletin 2013/49**

(51) Int Cl.:
**G01N 15/08** (2006.01)

(21) Application number: **11857000.1**

(22) Date of filing: **31.12.2011**

(86) International application number:
**PCT/CN2011/085129**

(87) International publication number:
**WO 2012/100631 (02.08.2012 Gazette 2012/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2011 CN 201110030013**

(71) Applicants:
• **Commercial Aircraft Corporation Of China Ltd Shanghai 200120 (CN)**
• **Shanghai Aircraft Manufacturing Co., Ltd Shanghai 200436 (CN)**

(72) Inventors:
• **LIU, Weiping**
  **Shanghai**
  **200436 (CN)**
• **ZHANG, Dongmei**
  **Shanghai**
  **200436 (CN)**
• **ZHENG, Yizhu**
  **Shanghai**
  **200436 (CN)**
• **WANG, Xu**
  **Shanghai**
  **200436 (CN)**
• **SU, Jiazhi**
  **Shanghai**
  **200436 (CN)**
• **MA, Xiaoxing**
  **Shanghai**
  **200436 (CN)**

• **LIU, Jun**
  **Shanghai**
  **200436 (CN)**
• **LI, Zhiyuan**
  **Shanghai**
  **200436 (CN)**
• **WANG, Xinjing**
  **Shanghai**
  **200436 (CN)**
• **LI, Min**
  **Haidian District**
  **Beijing 100191 (CN)**
• **GU, Yizhuo**
  **Haidian District**
  **Beijing 100191 (CN)**
• **XIN, Chaobo**
  **Haidian District**
  **Beijing 100191 (CN)**
• **LI, Yanxia**
  **Haidian District**
  **Beijing 100191 (CN)**
• **ZHANG, Zuoguang**
  **Haidian District**
  **Beijing 100191 (CN)**

(74) Representative: **Bergmeier, Werner**
  **Canzler & Bergmeier**
  **Friedrich-Ebert-Straße 84**
  **85055 Ingolstadt (DE)**

(54) **TESTING APPARATUS FOR TESTING AIR PERMEABILITY ON THICKNESS DIRECTION OF PLASTIC MATRIX, AND METHOD THEREFOR**

(57) The present invention discloses a testing apparatus for testing air permeability on thickness direction of a plastic matrix, comprising: a mold at least comprising a cavity and a cover plate, a loading device, a temperature control device, a vacuum suction device, and a flow detection element, wherein the cover plate has a receiving through hole in which an upper permeable sheet and a lower permeable sheet are received, the loading device being adapted to press the upper permeable sheet, a test sample to be tested being laid flatly between the upper permeable sheet and the lower permeable sheet; an air inlet and an air outlet being arranged on the cavity in an up-down direction of the cavity corresponding to the upper permeable sheet and the lower permeable sheet, respectively. The air inlet is communicated with the flow detection element and the air outlet is commu-

**(Cont. next page)**

nicated with the vacuum suction device. The present invention can be applied to achieve accurate test of air permeability of the prepreg plastic matrix in the thickness direction under different pressure and temperature conditions.

**Fig. 3**

**Description**

**Field of the Invention**

The present invention relates to an apparatus and method for testing air permeability, and more specifically to an apparatus and method for testing air permeability of a test sample on thickness direction of a plastic matrix by using air as a test fluid.

**Background of the Invention**

Permeability is a parameter characterizing difficulty of a fluid flowing through a porous medium under a pressure. The greater the permeability is, the smaller a resistance of the porous material against flow of the fluid will be. During preparation of a resin-based composite material by using an autoclave or a vacuum bag process, permeability of a prepreg plastic matrix is one of crucial factors affecting discharge of entrained air and volatile components under the action of vacuum, and therefore affects the forming quality of members made of the composite material to a certain degree. A prepreg system comprises a fiber reinforcement and a resin substrate. Hence, the permeability of the prepreg plastic matrix is substantially different from that of a fiber plastic matrix. The permeability of the prepreg plastic matrix not only depends on physical properties and fiber network structure, but also is related to physical properties of the resin substrate. In recent years, permeability of the fiber plastic matrix has already became a focus of study in the field of composite material. However, methods for testing the permeability of the prepreg plastic matrix are seldom reported. This is mainly because the test of permeability of the prepreg plastic matrix is confronted with certain difficulties, for example, (1) the prepreg system contains the resin substrate; if the liquid is used as a test fluid, a flow front is difficult to be judged and permeability cannot be accurately tested; (2) test of permeability of the prepreg plastic matrix by using air imposes higher requirements for the sealing of the testing apparatus; (3) due to a gap between the prepreg plastic matrix and a test mold, air flows in the gap so that a large testing deviation is caused; (4) during solidification, the prepreg plastic matrix is affected by temperature and pressure, so it is difficult to achieve the test of the permeability during the solidification. As can be seen from the above, designs of the apparatus and method for testing the air permeability of the prepreg plastic matrix are of important theoretical significance and high application value, and will confront with a certain technical difficulty, that is, accurate measurement cannot be achieved unless influences from many factors are taken into consideration together.

**Summary of the Invention**

To overcome the technical problem in the prior art that there is difficulty in using air as fluid to test the permeability of a plastic matrix to be tested, particularly the permeability in the thickness direction of the prepreg plastic matrix, the present invention provides a testing apparatus for testing air permeability in a thickness direction. Preferably, the apparatus is applied to the test of permeability of a prepreg in a resin-based composite material. The apparatus achieves the test of air permeability of the prepreg plastic matrix in the thickness direction by providing a power enabling air to move in the thickness direction of the prepreg plastic matrix in a vacuum cavity. Measurement of the air permeability of the prepreg in a solidifying process can be achieved by regulating pressure and temperature.

The present invention provides a testing apparatus for testing air permeability in a thickness direction of a plastic matrix, comprising: a mold at least comprising a cavity and a cover plate sealed airtight with a cavity wall of the cavity, a loading device for controlling a test pressure, a temperature control device for controlling a test temperature, a vacuum suction device for vacuumize the cavity, and a flow detection element for detecting air flow, wherein the cover plate has a receiving through hole in which an upper permeable sheet and a lower permeable sheet are received, the loading device being adapted to press the upper permeable sheet, a test sample to be tested being laid flatly between the upper permeable sheet and the lower permeable sheet; an air inlet and an air outlet being arranged on the cavity in an up-down direction of the cavity corresponding to the upper permeable sheet and the lower permeable sheet, respectively; wherein the air inlet is communicated with the flow detection element and the air outlet is communicated with the vacuum suction device, and wherein after the vacuum suction device is started to make the pressure at the air inlet higher than the pressure at the air outlet, air flows from the air inlet, through the upper permeable sheet, through the test sample in the thickness direction of the plastic matrix of the test sample, and then out of the air outlet through the lower permeable sheet.

Specifically, the control temperature device at least comprises a heating rod.

Specifically, the vacuum suction device is a vacuum pump.

Preferably, a vacuum gauge is provided between the vacuum pump and the air outlet.

Preferably, the upper permeable sheet and/or lower permeable sheet are made of a porous material.

Specifically, the loading device comprises a loading flat panel and a loading body, wherein the loading flat panel is located on the upper permeable sheet, and the loading body applies a pressure to the loading flat panel.

Alternatively, the cavity is provided with cavity air guide recesses which are adjacent to the inner wall of the cavity and used as a circulation passage of air after the air passes through the lower permeable sheet and before it enters the air outlet.

Alternatively, cover plate air guide recesses are provided at the edge of the receiving through hole of the cover plate by which the air flows from the air inlet and through the upper permeable sheet.

Alternatively, the test sample to be tested is a prepreg.

Alternatively, the test sample to be tested is laid flatly between the upper permeable sheet and the lower permeable sheet in a uni-directional laying manner, an orthogonal laying manner, or a quasi-isotropic laying manner.

The testing apparatus for testing air permeability of the prepreg plastic matrix in the thickness direction according to the present invention has the following advantages: (1) accurate test of the air permeability of the prepreg plastic matrix in the thickness direction can be achieved under different pressure and temperature conditions; (2) the apparatus is adapted for a prepreg of various continuous fibers such as glass fiber, carbon fiber and aramid fiber, as well as for a prepreg of various fabrics; (3) the apparatus can achieve measurement of the air permeability of the prepreg which is laid in different laying manners or laid with different numbers of layers; (4) the apparatus exhibits a small measurement error, a high test reliability and a high repeatability; (5) the apparatus is simple, easily operable and time-saving. The present invention further provides a method for measuring air permeability in a thickness direction of a plastic matrix, comprising the following steps:

(1) sealing the air inlet of the mold and starting the vacuum suction device communicated with the air outlet of the mold to inspect whether there is air leakage;

(2) applying a test pressure to the upper permeable sheet and the lower permeable sheet received in the receiving through hole of the cover plate of the mold by the loading device, if the inspection result in step (1) is no air leakage, under a condition of with or without the test sample to be tested, and measuring a thickness h of the test sample;

(3) setting a pressure of the vacuum suction device as P to form a differential pressure between the air outlet and the air inlet so as to enable the air to flow, setting the pressure of the test sample as a test pressure corresponding to the thickness h of step (2) via the loading device, setting a temperature of the cavity as a test temperature T via the temperature control device and obtaining a corresponding air viscosity $\eta$ via a temperature-viscosity formula, and detecting an air flow rate Q via the flow detection element;

(4) calculating the permeability in the thickness direction according to a permeability calculating formula.

Specifically, the temperature-viscosity formula is $\dfrac{\eta}{\eta_0} = \left(\dfrac{T}{T_0}\right)^{\frac{3}{2}} \dfrac{T_0 + C}{T + C}$, wherein $T_0$ and $\eta_0$ represent a reference temperature and a corresponding viscosity, respectively, and C represents a constant related to air type.

Specifically, the permeability calculating formula is $K = \dfrac{Q\eta l}{Phb}$, wherein $l$ and $b$ represent a length and a width of the plastic matrix of the test sample, respectively.

Preferably, the step (1) further comprises a step of sealing the loading device and the cover plate and inspecting whether there is air leakage.

Preferably, the step (1) further comprises a step of sealing the cavity and the loading device and inspecting whether there is air leakage.

Specifically, in the step (1), the vacuum suction device sets the pressure of the cavity as -0.1MPa; if no pressure relief occurs after the vacuum suction device is switched off, there is no air leakage.

Specifically, in the step (2), if a thickness as measured after the loading device applying a pressure to the upper permeable sheet and the lower permeable sheet without the test sample is set as h1 and a thickness as measured after the loading device applying a pressure to the upper permeable sheet and the lower permeable sheet with the test sample is set as h2, the thickness of the test sample is h=h2-h1.

Specifically, in the step (3), the vacuum pressure is in a range of -0.02-0MPa.

## Brief Description of Drawings

Exemplary embodiments of the present invention will be described hereunder with reference to the drawings to make the present application apparent. Among the figures,

Fig. 1     is a structural view of a cavity of a testing apparatus for testing air permeability in a thickness direction;

Fig. 2     is a structural view of a sealing cover plate of the testing apparatus for testing air permeability in a thickness direction;

Fig. 3     is a side view of an assembled structure of the testing apparatus for testing air permeability in a thickness direction with a portion being cutaway;

Fig. 4     illustrates a front view, a right view and a top view of Fig.3;

Fig. 5     is a view showing a whole assembling structure of the testing apparatus for testing air permeability in a thickness direction;

Fig. 6     is an illustrative assembly diagram of the testing apparatus for testing air permeability in a thickness direction;

Fig. 7     is a curve diagram showing an air permeability relative to a test pressure of carbon fiber/epoxy 914 resin prepreg in a thickness direction of the plastic matrix; and

Fig. 8     is a curve diagram showing an air permeability relative to a test pressure of T700 carbon fiber/ bismaleimide resin uni-directional prepreg in a thickness direction of the plastic matrix.

## Detailed Description of Preferred Embodiments

The present invention will be further described in detail with reference to the figures.

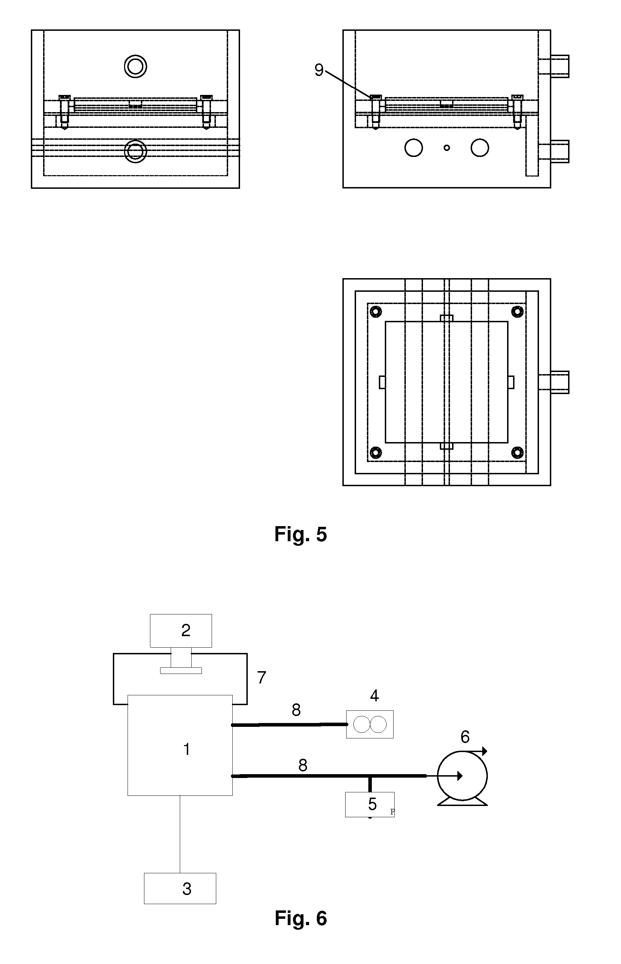

The present invention provides a testing apparatus for testing permeability in a thickness direction of a plastic matrix. Preferably, the apparatus may be applied to the test of the permeability of the resin-based composite material prepreg. As shown in Fig.6, the testing apparatus comprises a test mold 1, a loading device 2, a temperature control device 3, a flow detection element 4, a vacuum detection element 5 and a vacuum suction device 6. Specifically, the flow detection element 4 is an air flow meter, the vacuum detection element 5 is a vacuum gauge, and the vacuum suction device 6 is a vacuum pump. The test mold 1 and the loading device 2 are sealed by using a sealing film 7. The flow meter 4 is connected to an air inlet 102 of the test mold 1 via an air duct 8, an air outlet 103 of the test mold 1 is connected to the vacuum gauge 5 and the vacuum pump 6 via the air duct 8, and the temperature control device 3 performs temperature control of the test mold 1. The loading device 2 comprises a loading flat panel 21 and a loading body, wherein the loading body applies a pressure to a plastic matrix of a test sample to be tested via the loading flat panel 21, and the loading body is preferably configured as a press machine. The temperature control device 3 is preferably configured as a heating rod and may be controlled and regulated by a temperature control meter.

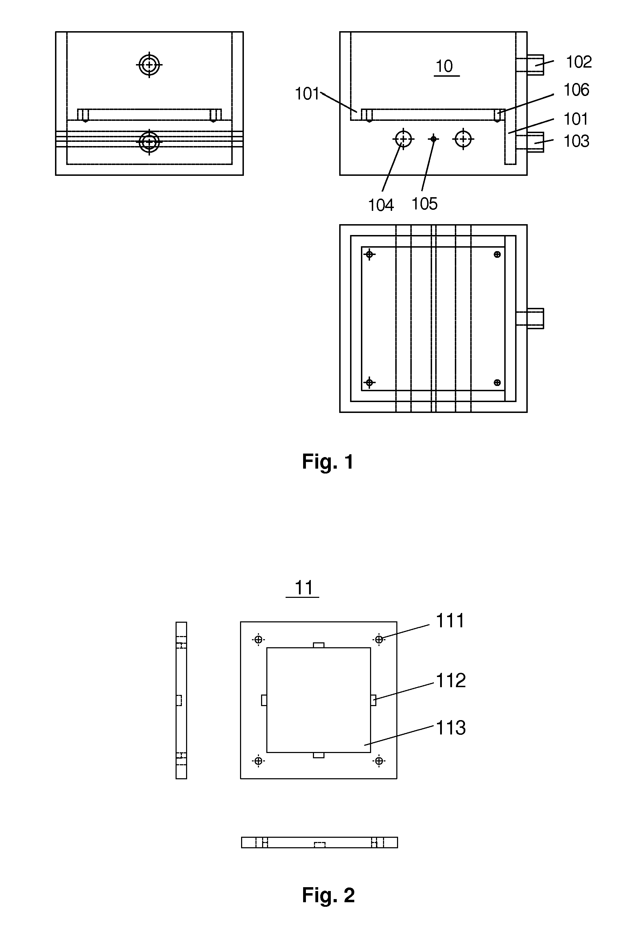

As shown in Fig.1, the cavity 10 comprises cavity air guide recesses 101, the air inlet 102, the air outlet 103, a heating rod hole 104, a thermocouple hole 105 and a threaded hole 106, wherein the cavity air guide recess 101 is provided around an inner wall of the cavity 10, one side of the cavity air guide recess 101 adjacent to the air outlet 103 has a depth of 5cm to facilitate the communication with the air outlet 103, and the cavity air guide recesses 101 at the remaining three sides respectively has a depth of 1 cm. The cavity air guide recesses 101 at all sides respectively has a width of 1 cm. That is to say, the cavity air guide recesses 101 form an air-circulating "chamber" around the inner wall of the cavity 10 so that the flow of the air in the thickness direction of the test sample to be tested can be ensured better.

In combination with Fig.2 and Fig.5, wherein Fig.2 shows a structure of the sealing cover plate 11. The sealing cover plate 11 has a thickness of 10cm and has four threaded through holes 111, four cover plate air guide recesses 112 and one receiving through hole 113 at a center, wherein the sealing cover plate 11 is connected to the cavity 10 with locking bolts 9 running through the threaded through holes 111; each of the cover plate air guide recesses 112 has a width of 5mm and a depth of 5mm; the receiving through hole 113 is used to receive the test sample and its size is $10 \times 10 cm^2$.

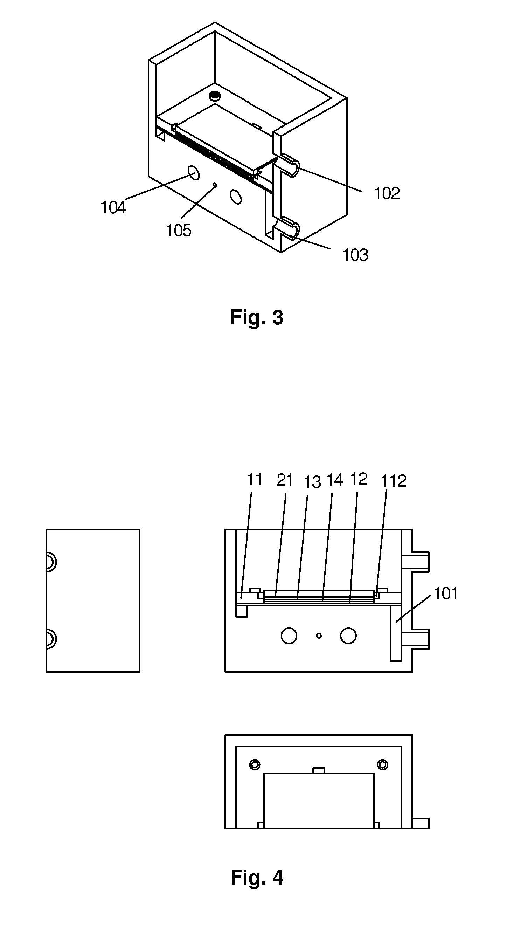

As shown in Fig.3 to Fig.5, a periphery of the sealing cover plate 11 exactly engages with the inner wall of the cavity 10 and divides the cavity 10 into two independent sub-cavities, namely, an upper sub-cavity and a lower sub-cavity. A lower permeable sheet 12 and an upper permeable sheet 13 are received in the receiving through hole 113 of the sealing cover plate 11, the test sample 14 to be tested is laid flatly between the lower permeable sheet 12 and the upper permeable sheet 13, the loading flat panel 21 is adapted to press the upper permeable sheet 13, and the loading body is connected to the loading flat panel 21. The lower permeable sheet 12 comprises an upper portion and a lower portion, wherein the upper portion has a size of $10 \times 10 cm^2$, and the lower portion has a size of $15 \times 15 cm^2$. The upper permeable sheet 13 has a size of $10 \times 10 cm^2$. Preferably, the upper permeable sheet 13 and the lower permeable sheet 12 are both made of a porous material which is specifically selected from a porous permeable felt. The two sub-cavities are allowed to generate a pressure difference via the vacuum pump 6 to achieve the test of permeability of the test sample to be tested in the thickness direction.

In the present invention, the test sample 14 to be tested refers to a prepreg plastic matrix. Fibers in the prepreg plastic matrix may be glass fibers, carbon fibers, aramid fibers or basalt fibers, etc.; a prepreg reinforcement may be a uni-directional fiber or fiber fabric, wherein the fiber fabric may be plain fabric, twill fabric, satin fabric or the like; the resin in the prepreg may be epoxy resin, phenolic resin, cyanate ester resin, bismaleimide resin or the like. The laying manner of the prepreg comprises uni-directional laying, orthogonal laying, quasi-isotropic laying or the like.

The present invention can be used to test air permeability of a resin-based composite material prepreg plastic matrix in a thickness direction. Specific operations are as follows:

Preparation of test sample

First, the prepreg is cut into pieces with a size of $10 \times 10 cm^2$, and then the pieces are laid in a laying manner.

Packaging of test sample

Referring to Fig.1 to Fig.5, the lower portion with an area of $15 \times 15 cm^2$ of the lower permeable sheet 12 is laid flatly in the cavity 10 first, and its edge covers the cavity air guide recesses 101 of the cavity 10; then the locking bolts 9 are used to fix the sealing cover plate 11 to the cavity 10; then the upper portion with an area of $10 \times 10 cm^2$ of the lower permeable sheet 12 is placed in the receiving through hole 113 of the sealing cover plate 11; finally, the prepreg plastic matrix 14, the upper permeable sheet 13 and the loading flat panel 21 are placed in turn. The upper permeable sheet 13 should be ensured to have a sufficient thickness. When the loading body applies a load to the loading flat panel 21, the upper surface of the upper permeable sheet 13 should be ensured to have a height of 2-4mm above the lower edge of the cover plate air guide recess 112 of the sealing cover plate 11. A gap between the sealing cover plate 11 and the cavity 10 should be sealed by a sealing adhesive tape to make sure of no flow of air along the gap.

Cavity leakage testing

Referring to Fig.6, with the completion of the packaging, the sealing adhesive tape is used to seal the gap between the loading flat panel 21 and the sealing cover plate 11, and then the air outlet 103 is connected to the vacuum gauge 5 and the vacuum pump 6 via the air duct 8. Then, the vacuum pump 6 is started, and the sealing adhesive tape is inspected and pressed tightly. When the vacuum gauge 5 displays a value up to -0.1 MPa, the vacuum pump 6 is switched off, and the pressure relief of the vacuum gauge 5 shall be checked. In the event of pressure relief, leakage point should be found out  and sealed by using the sealing adhesive tape. Such operations are repeated for many times until the vacuum gauge 5 does not relieve pressure after the vacuum pump 6 is switched off, and then overall test of leakage is performed. At this time, the sealing adhesive tape between the loading flat panel 21 and the sealing cover plate 11 is removed, the sealing film 7 is used to connect the upper end of the cavity 10 to a plunger of the loading device 2 (that is, an opening edge of the cavity 10 is connected to a loading end of the loading device 2 via the sealing film 7), and sealing is performed by using the sealing adhesive tape. As such, the sealing performance of the cavity 10 is ensured so that the air can only flow into the cavity 10 via the air inlet 102 so as to ensure accurate measurement of the air flow meter 4 and test precision of the air permeability. Then the air inlet 102 is blocked, the vacuum pump 6 is started, and the sealing adhesive tape binding the sealing film 7, the cavity 10 and the loading device 2 is checked and pressed tightly. When the vacuum gauge 5 displays a value up to -0.1MPa, the vacuum pump 6 is switched off, and the pressure relief of the vacuum gauge 5 shall be checked. In the event of pressure relief, leakage points should be found out and sealed by using the sealing adhesive tape. Such operations are repeated for many times until the vacuum gauge 5 does not relieve pressure after the vacuum pump 6 is switched off, and then the test of permeability is performed.

Testing of the thickness of the prepreg plastic matrix

The loading flat panel 21 is directly laid flatly in the cavity 10. The loading device 2 is used to apply a pressure up to a preset pressure, a dial gauge is adjusted and fixed to allow its contact head to contact the upper surface of the loading flat panel 21, and the dial gauge reads $h_0$.

After pressure relief, the loading flat panel 21 is moved away, the prepreg plastic matrix 14 is directly laid in the cavity 10 and the loading flat panel 21 is placed thereon. When the preset pressure is reached, the contact head of the dial gauge is allowed to contact the upper surface of the loading flat panel 21, and the dial gauge reads $h_1$.

Under this pressure, the thickness of the prepreg plastic matrix 14 is $h = h_1 - h_0$ with a measure unit of m.

Testing of permeability of the prepreg plastic matrix in the thickness direction

The air outlet 103 of the test mold 1 is connected to the vacuum gauge 5 and the vacuum pump 6 via the air duct 8, and the air inlet 102 is connected to the flow meter 4 via the air duct 8.

Subsequently, the loading device 2 is adjusted to control the test pressure applied to the prepreg plastic matrix 14. In an embodiment of the present invention, the pressure at a unit area is in a range of 0-0.6MPa;

Then, the temperature control device 3 is regulated to control a temperature in the test mold. In an embodiment of the present invention, the temperature is in a range of from room temperature to 200°C;

Then the vacuum pump 6 is started. An air valve is used to regulate a vacuum pressure, and the vacuum gauge 5 is used to accurately measure the pressure valve P. Since air is compressible, the vacuum pressure should be controlled in a range of -0.02-0MPa during test to ensure accuracy of the test results;

Under a pressure gradient, air enters the air inlet 102 through the flow meter 4 and enters the upper permeable sheet 13 through the cover plate air guide recess 112 of the sealing cover plate 11. Since the upper permeable sheet 13 has a higher air permeability, it is ensured that the air can form a flow front on the upper surface of the whole prepreg plastic matrix after air enters the upper permeable sheet 13 along the cover plate air guide recess 112, and thereby it is ensured that the air flows out of the prepreg in the thickness direction of the prepreg, and flows towards the air outlet 103 through the lower permeable sheet 12 and the cavity air guide recesses 101. At this time, a volume flow rate Q of air is measured through the flow meter 4, with a measure unit of $m^3/s$.

Finally, the permeability $K$ in the thickness direction of the prepreg plastic matrix 14 may be obtained according to Darcy law.

The permeability in the thickness direction is $K = \dfrac{Q\eta h}{Pbl}$, wherein K represents the permeability of the prepreg plastic matrix 14 in the thickness direction and has a measure unit of $m^2$; $P$ represents a value of the vacuum pressure with a measure unit of Pa ; $l$ and $b$ represent a length and a width of the prepreg plastic matrix 14 respectively and are both 10cm in this test; $\eta$ represents air viscosity with a measure unit of Pa.s.

By adjusting the loading device 2 and the temperature control device 3, the pressure and temperature acting on the prepreg plastic matrix 14 are changed to test the permeability of the prepreg plastic matrix 14 in the thickness direction under different pressure and temperature conditions.

The air viscosity $\eta$ increases as the temperature T rises. At the temperature T<2000K, the air viscosity may be calculated from Satran formula

$$\frac{\eta}{\eta_0} = \left(\frac{T}{T_0}\right)^{\frac{3}{2}} \frac{T_0 + C}{T + C}.$$

In this formula, T represents a testing temperature condition with a measure unit of K; $\eta$ represents the air viscosity, i.e. air viscosity here, with a measure unit of Pa.s; $T_0$ and $\eta_0$ represent a reference temperature (K) and a corresponding viscosity respectively; C is a constant related to air type, and the constant of air C=110.4K. The air viscosities under partial temperatures are listed in Table 1 below.

Table 1: Air Viscosities under Different Temperature Conditions

| Temperature (°C) | Viscosity ($10^{-6}$Pa·S) |
|---|---|
| 0 | 16.8 |
| 10 | 17.3 |
| 15 | 17.8 |
| 20 | 18.0 |
| 40 | 19.1 |

(continued)

| Temperature (°C) | Viscosity ($10^{-6}$Pa·S) |
|---|---|
| 60 | 20.3 |
| 80 | 21.5 |
| 100 | 22.8 |

A volume of air is greatly affected by the temperature. The flow meter 4 measures air flow under a measurement value of $T_0$. When the test mold has a temperature T, the air flow under this temperature condition may be calculated by using a modification formula $Q = \dfrac{T}{T_0}Q_0$.

Embodiment 1:

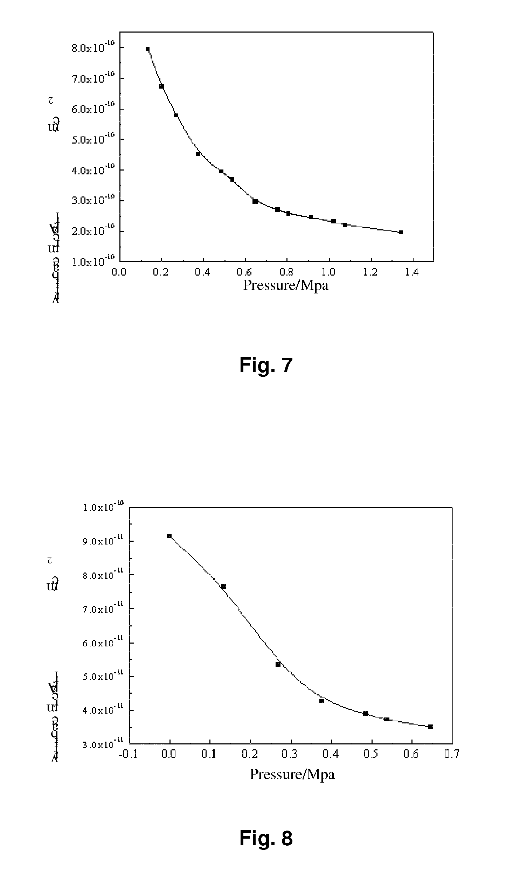

In the present embodiment, the carbon fiber/epoxy 914 resin fabric prepreg is used as a test object. The prepreg is cut into pieces with a size of $10 \times 10cm^2$, and seven layers of the pieces are laid. The loading device 2 is used to apply a load to the loading flat panel 21 so as to measure the air permeability of the prepreg plastic matrix 14 in the thickness direction under different pressure conditions. At a test temperature of 20°C, the air viscosity is $18 \times 10^{-6}$Pa·S. The test results are shown in Fig.7.

Embodiment 2:

In the present embodiment, the T700 carbon fiber/ bismaleimide resin uni-directional prepreg is used as a test object. The prepreg is cut into pieces with a size of $10 \times 10cm^2$, and 16 layers of the pieces are laid in the uni-directional laying manner. The loading device 2 is used to apply a load to the loading flat panel 21 to measure the air permeability of the prepreg plastic matrix 14 in the thickness direction under different pressure conditions. At a test temperature of 20°C, the air viscosity is $18 \times 10^{-6}$Pa·S. The test results are shown in Fig.8.

Embodiment 3:

In the present embodiment, the T700 carbon fiber/ bismaleimide resin uni-directional prepreg is used as a test object. The prepreg is cut into pieces with a size of $10 \times 10cm^2$, and 16 layers of the pieces are laid in the uni-directional laying manner. The loading device 2 is used to apply a unit pressure of 0.65 MPa to the loading flat panel 21 acting on the upper permeable sheet 13 to measure the air permeability of the prepreg plastic matrix 14 in the thickness direction under different temperature conditions. The test results are shown in Table 2 below.

Table 2: Air Permeability of the Prepreg Plastic matrix in the Thickness direction under Different Temperature Conditions

| Temperature (°C) | Permeability in the thickness direction ($10^{-15}m^2$) |
|---|---|
| 20 | 3.22 |
| 25 | 2.82 |
| 30 | 2.39 |
| 35 | 1.78 |
| 40 | 1.30 |
| 45 | 0.83 |
| 50 | - |

In the above embodiments, the range of the testing pressure varies. For example, in the embodiment 1, the test pressure may reach 1.3MPa, while the test pressure in the embodiment 2 may reach 0.65MPa and the pressure applied in the embodiment 3 is also 0.65MPa. Those skilled in the art may appreciate that the pressure range upon the application of the present invention for testing is not limited to 0-0.6MPa, and the test may be performed in a broader pressure range according to the loading capability of the loading device. In addition, the test temperature range in the present invention is from room temperature to 200°C. This is because a cooling system is not additionally provided in the present invention and a temperature upper limit of the test instrument is 200°C. However, those skilled in the art may appreciate that so long as the test instrument permits, the present invention may test permeability in a broader temperature range.

The present invention is not, in any form, limited to exemplary embodiments presented in the description and drawings. Many variations are possible within the scope of the present invention as generalized by the appended claims. In addition, any reference signs in the claims shall not be construed as limiting the scope of the present invention.

The reference numbers in the figures denote the following features:

1 test mold
2 loading device
3 temperature control device
4 flow meter
5 vacuum gauge
6 vacuum pump
7 sealing film
8 air duct
9 locking bolt
10 cavity
11 sealing cover plate
12 lower permeable sheet
13 upper permeable sheet
14 prepreg plastic matrix
101 cavity air guide recess
102 air inlet
103 air outlet
104 heating rod hole
105 thermocouple hole
106 threaded hole
111 threaded through hole
112 cover plate air guide recess
113 receiving through hole
21 loading flat panel

## Claims

1. A testing apparatus for testing air permeability in a thickness direction of a plastic matrix, comprising: a mold at least comprising a cavity and a cover plate sealed airtight with a cavity wall of the cavity, a loading device for controlling a test pressure, a temperature control device for controlling a test temperature, a vacuum suction device for vacuumize the cavity, and a flow detection element for detecting air flow, wherein the cover plate has a receiving through hole in which an upper permeable sheet and a lower permeable sheet are received, the loading device being adapted to press the upper permeable sheet, a test sample to be tested being laid flatly between the upper permeable sheet and the lower permeable sheet; an air inlet and an air outlet being arranged on the cavity in an up-down direction of the cavity corresponding to the upper permeable sheet and the lower permeable sheet, respectively; wherein the air inlet is communicated with the flow detection element and the air outlet is communicated with the vacuum suction device, and wherein after the vacuum suction device is started to make the pressure at the air inlet higher than the pressure at the air outlet, air flows from the air inlet, through the upper permeable sheet, through the test sample in the thickness direction of the plastic matrix of the test sample, and then out of the air outlet through the lower permeable sheet.

2. The testing apparatus according to claim 1, wherein the control temperature device at least comprises a heating rod.

3. The testing apparatus according to claim 1, wherein the vacuum suction device is a vacuum pump.

4. The testing apparatus according to claim 3, wherein a vacuum gauge is provided between the vacuum pump and the air outlet.

5. The testing apparatus according to claim 1, wherein the upper permeable sheet and/or lower permeable sheet are made of a porous material.

6. The testing apparatus according to claim 1, wherein the loading device comprises a loading flat panel and a loading body, the loading flat panel being located on the upper permeable sheet, and the loading body applying a pressure to the loading flat panel.

7. The testing apparatus according to claim 1, wherein the cavity is provided with cavity air guide recesses which are adjacent to the inner wall of the cavity and used as a circulation passage of air after the air passes through the lower permeable sheet and before it enters the air outlet.

8. The testing apparatus according to claim 1, wherein cover plate air guide recesses are provided at the edge of the receiving through hole of the cover plate by which the air flows from the air inlet and through the upper permeable sheet.

9. The testing apparatus according to claim 1, wherein the test sample to be tested is a prepreg.

10. The testing apparatus according to claim 1, wherein the test sample to be tested is laid flatly between the upper permeable sheet and the lower permeable sheet in a uni-directional laying manner, an orthogonal laying manner, or a quasi-isotropic laying manner.

11. A method for using the testing apparatus according to any one of claims 1-10 to measure air permeability in a thickness direction of a plastic matrix, comprising the following steps:

(1) sealing the air inlet of the mold and starting the vacuum suction device communicated with the air outlet of the mold to inspect whether there is air leakage;
(2) applying a test pressure to the upper permeable sheet and the lower permeable sheet received in the receiving through hole of the cover plate of the mold by the loading device, if the inspection result in step (1) is no air leakage, under a condition of with or without the test sample to be tested, and measuring a thickness h of the test sample;
(3) setting a pressure of the vacuum suction device as P to form a differential pressure between the air outlet and the air inlet so as to enable the air to flow, setting the pressure of the test sample as a test pressure corresponding to the thickness h of step (2) via the loading device, setting a temperature of the cavity as a test temperature T via the temperature control device and obtaining a corresponding air viscosity $\eta$ via a temperature-viscosity formula, and detecting an air flow rate Q via the flow detection element;
(4) calculating the permeability in the thickness direction according to a permeability calculating formula.

12. The method according to claim 11, wherein the temperature-viscosity formula is $\dfrac{\eta}{\eta_0} = \left(\dfrac{T}{T_0}\right)^{\frac{3}{2}} \dfrac{T_0 + C}{T + C}$, wherein $T_0$ and $\eta_0$ represent a reference temperature and a corresponding viscosity, respectively, and C represents a constant related to air type.

13. The method according to claim 11, wherein the permeability calculating formula is $K = \dfrac{Q\eta l}{Phb}$, wherein $l$ and $b$ represent a length and a width of the plastic matrix of the test sample, respectively.

14. The method according to claim 11, wherein the step (1) further comprises a step of sealing the loading device and the cover plate and inspecting whether there is air leakage.

15. The method according to claim 14, wherein the step (1) further comprises a step of sealing the cavity and the loading device and inspecting whether there is air leakage.

16. The method according to claim 11, wherein in the step (1), the vacuum suction device sets the pressure of the cavity as -0.1MPa, if no pressure relief occurs after the vacuum suction device is switched off, there is no air leakage.

17. The method according to claim 11, wherein in the step (2), if a thickness as measured after the loading device applying a pressure to the upper permeable sheet and the lower permeable sheet without the test sample is set as h1, and a thickness as measured after the loading device applying a pressure to the upper permeable sheet and the lower permeable sheet with the test sample is set as h2, the thickness of the test sample is h=h2-h1.

18. The method according to claim 11, wherein in the step (3), the vacuum pressure is in a range of -0.02-0MPa.

**Fig. 1**

**Fig. 2**

**Fig. 3**

**Fig. 4**

**Fig. 5**

**Fig. 6**

**Fig. 7**

**Fig. 8**

# INTERNATIONAL SEARCH REPORT

| International application No. |
| --- |
| PCT/CN2011/085129 |

### A. CLASSIFICATION OF SUBJECT MATTER

G01N15/08（2006.01）i

According to International Patent Classification (IPC) or to both national classification and IPC

### B. FIELDS SEARCHED

Minimum documentation searched (classification system followed by classification symbols)

IPC：G01N

Documentation searched other than minimum documentation to the extent that such documents are included in the fields searched

Electronic data base consulted during the international search (name of data base and, where practicable, search terms used)

VEN，CNTXT，CPRSABS，CJFD：permeabilit+, vacuum+, gas+, air+, press+, load+

### C. DOCUMENTS CONSIDERED TO BE RELEVANT

| Category* | Citation of document, with indication, where appropriate, of the relevant passages | Relevant to claim No. |
| --- | --- | --- |
| P，X | CN102183444A（COMML AIRCRAFT CORP CHINA LTD et al）14 Sep. 2011（14.09.2011）claims 1-21 | 1-21 |
| A | CN1510398A（MATSUSHITA ELECTRIC IND CO LTD）07 Jul. 2004（07.07.2004）the whole document | 1-21 |
| A | CN2134650Y（LIGHT INDUSTRY DEPARTMENT FUZH）26 May 1993（26.05.1993）the whole document | 1-21 |
| A | JP2005-345342A（TAKAO KK）15 Dec. 2005（15.12.2005）the whole document | 1-21 |
| A | SU516947A1（MOSCOW MEAT DAIRY INST）16 Jun. 1977（16.06.1977）the whole document | 1-21 |
| A | US2003/0074954A1（BRIGHT C I et al）24 Apr. 2003（24.04.2003）the whole document | 1-21 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 23 Mar. 2012（23.03.2012） | 05 Apr. 2012（05.04.2012） |

| Name and mailing address of the ISA State Intellectual Property Office of the P. R. China No. 6, Xitucheng Road, Jimenqiao Haidian District, Beijing 100088, China Facsimile No. (86-10)62019451 | Authorized officer YANG, Lisha Telephone No. (86-10) 62085661 |
| --- | --- |

Form PCT/ISA/210 (second sheet) (July 2009)

## INTERNATIONAL SEARCH REPORT
### Information on patent family members

| International application No. |
|---|
| PCT/CN2011/085129 |

| Patent Documents referred in the Report | Publication Date | Patent Family | Publication Date |
|---|---|---|---|
| CN102183444A | 14.09.2011 | None | |
| CN1510398A | 07.07.2004 | US2004123646A1 | 01.07.2004 |
| | | SG123584A1 | 26.07.2006 |
| | | JP2004219407A | 05.08.204 |
| | | KR20040058057A | 03.07.2004 |
| | | TW200422604A | 01.11.2004 |
| CN2134650Y | 26.05.1993 | None | |
| JP2005-345342A | 15.12.2005 | JP3930871B2 | 13.06.2007 |
| SU516947A1 | 16.06.1977 | None | |
| US2003/0074954A1 | 24.04.2003 | US6766682B2 | 27.07.2004 |

Form PCT/ISA/210 (patent family annex) (July 2009)